# EUROPÄISCHE PATENTANMELDUNG

(11) **EP 2 131 183 A1**
(43) Veröffentlichungstag der Anmeldung: **09.12.2009**
(21) Anmeldenummer: 08104278.0
(22) Anmeldetag: 05.06.2008
(51) Int. Cl.: G01N 21/64, G01N 21/84, G01N 21/958

(54) **Vorrichtung zur Bestimmung der Elementbelegung auf einer Oberfläche mittels Fluoreszenz**

(71) Anmelder: Bohle AG, 42781 Haan (DE)
(72) Erfinder: Ostendarp, Heinrich Dr., 42781 Haan (DE); Piontek, Siegfried, 42349 Wuppertal (DE)
(74) Vertreter: Cohausz & Florack

(57) **Zusammenfassung**

Die Erfindung betrifft eine Vorrichtung zur Bestimmung der Elementbelegung auf einer Oberfläche (G) umfassend eine Strahlquelle (1), deren Strahlung das Element zur Fluoreszenz anregt, Erfindungsgemäß ist die Vorrichtung dadurch gekennzeichnet, dass sie eine Detektoreinheit (2) zur Detektion der Fluoreszenzstrahlung aufweist und die Strahlquelle (1) eine UV-Strahlung emittierende Leuchtdiode (1a) umfasst. Ferner betrifft die Erfindung ein Verfahren zur Bestimmung der Elementbelegung auf einer Oberfläche (G), bei der die Oberfläche mit einer das Element zur Fluoreszenz anregenden Strahlung (U) bestrahlt wird. Insbesondere bezieht sich das Verfahren auf die Bestimmung der Zinnseite bei einem in Float-Prozess hergestellten Floatglasprodukt.

## Beschreibung

Die Erfindung betrifft eine Vorrichtung zur Bestimmung der Elementbelegung auf einer Oberfläche, insbesondere zur Bestimmung der Zinnkontamination auf Floatglas, umfassend eine Strahlquelle, deren Strahlung das Element zur Fluoreszenz anregt. Ferner betrifft die Erfindung ein Verfahren zur Bestimmung der Elementbelegung auf einer Oberfläche eines Glasproduktes und vorteilhafte Verwendungen der Vorrichtung.

In der modernen Glasfertigung wird Flachglas, das z.B. als Fensterglas, aber auch als Vorprodukt für Spiegel- und Automobilglas eingesetzt wird, überwiegend (ca.95%) als Floatglas im Floatprozess hergestellt. Hierbei wird die gereinigte, bei 1.100 °C teigig-flüssige Glasschmelze in einem endlos-kontinuierlichen Prozess fortlaufend von einer Seite in ein längliches Bad aus flüssigem Zinn geleitet, welches in einer Schutzgasatmosphäre zur Vermeidung einer Oxidation gehalten wird. Auf der Oberfläche des flüssigen Zinns schwimmt das etwa ²/₃ leichtere Glas und breitet sich wie ein Ölfilm gleichmäßig aus. Durch die Oberflächenspannung des Zinns und des flüssigen Glases bilden sich extrem glatte Oberflächen. Das am kühleren Ende des Bades erstarrte, noch ca. 600 °C warme Glas wird fortlaufend herausgezogen und durchläuft einen Kühlofen, in welchem es verspannungsfrei heruntergekühlt wird. Nach einer optischen Qualitätskontrolle wird das Glas schließlich geschnitten.

Die besonderen Eigenschaften von Zinn qualifizieren es in besonderer Weise für den Einsatz bei der Floatglasherstellung. So hat Zinn mit 232 °C einen vergleichsweise niedrigen Schmelzpunkt, so dass es bis zum völligen Erstarren des Glases noch flüssig bleibt; ferner hat es bei den verwendeten 1.100 °C noch keinen hohen Dampfdruck, der zu Ablagerungen und Unebenheiten an der Glasunterseite führen könnte, und verhält sich gegenüber dem Glas inert. Allerdings kommt es zu einer geringfügigen diffusionsbedingten Absorption von Sn²⁺-Ionen in der zinnbadseitigen Oberfläche des Floatglases, was dann ein Problem darstellt, wenn eine besondere Oberflächenreinheit gefordert wird. Diese wird beispielsweise bei der Funktionalisierung von Glasoberflächen zur Herstellung von Glasverbünden, zur Glasverklebung oder zur Beschichtung gefordert.

Ein weiteres erhebliches Problem stellt die sogenannte Glaskorrosion dar, welche zwar sowohl auf der Zinnbadseite als auch auf der abgewandten Seite auftritt. Allerdings lässt sich eine Schutzbeschichtung zuverlässiger auf der abgewandten Seite aufbringen.

Bei der Glaskorrosion handelt es sich im Einzelnen um eine strukturelle Veränderung und damit verbundene Verwitterung der Glasoberfläche durch verschiedenartige chemische und physikalische Einflüsse, was sich bei fortschreitender Korrosion makroskopisch durch eine Trübung infolge einer dünnen Aufrauung und feinen Rissbildung in der Oberfläche bemerkbar macht. Mikroskopisch beginnt die Glaskorrosion mit dem Herauslösen von Oxiden diverser Elemente, z.B. Natrium, Kalium, Calcium, Barium oder Bor. An den betroffenen Stellen verändern sich damit die physikalischen Eigenschaften des Materials. Es bildet sich eine Gelschicht, die mit Ionen des einwirkenden Stoffes weiter zu einem schleierhaften Überzug reagiert, was ebenfalls die Transparenz der Oberfläche und damit den Qualitätseindruck merklich beeinträchtigt.

Die Glaskorrosion hat eine Reihe weiterer gravierender Nachteile. So können beim Handhaben der Glasscheiben im Lager durch Sauger Saugerabdrücke an der Gelschicht der Glasscheibenoberflächen entstehen. Ferner wird die Gelschicht bei der Lagerung der Glasscheiben durch Luftfeuchtigkeit und Kondensation von Wasser auf den Oberflächen des Glases derart verstärkt, dass sogar aneinanderliegende Scheiben in Scheibenstapeln miteinander verkleben können. Ein weiteres Problem der Glaskorrosion besteht darin, dass es zu Fehlern oder mangelhaften Qualitäten bei Beschichtungen oder Veredelungen auf der Gelschicht oder korrodierten Schicht kommen kann.

Die Zinnbadseite und die in der Floatglasproduktion vom Zinnbad abgewandte Seite weisen daher eine Reihe nennenswerter Unterschiede auf, die bei der Weiterverarbeitung der Gläser von erheblicher Bedeutung sein können. Es kommt daher entscheidend darauf an, zu jedem Zeitpunkt die Zinnbadseite des Glasproduktes zuverlässig bestimmen zu können.

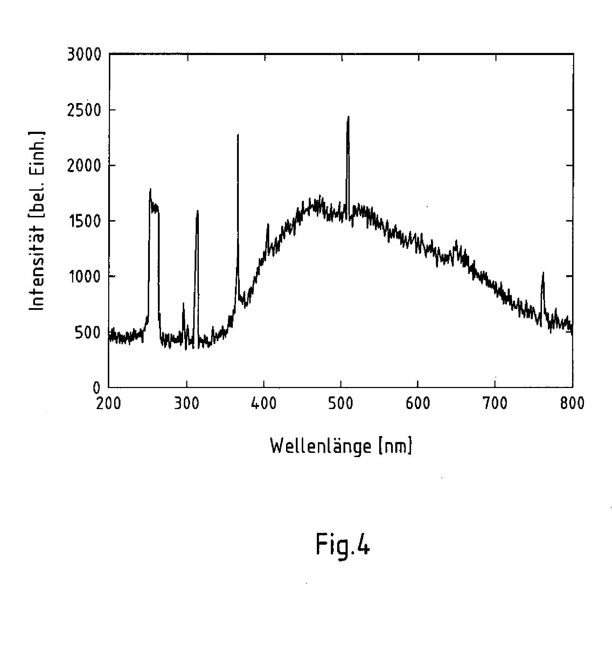

Hierbei kann ausgenutzt werden, dass die auf der Zinnbadseite des Glases eindiffundierten Zinnatome durch Bestrahlung mit UV-Licht zur Fluoreszenz angeregt werden. Bei der Fluoreszenz werden die Atome jeweils durch Absorption eines Lichtquants, vorliegend eines UV-Lichtquants, in einen elektronisch angeregten Zustand überführt, was aufgrund der geringen Lebensdauer dieses Zustands (einige Nanosekunden) praktisch instantan einen Relaxationsprozess einleitet, der einerseits strahlungslos durch Umwandlung in Schwingungsenergie oder strahlend durch Aussendung eines Fluoreszenzphotons ablaufen kann. Entsprechend der Stokes'schen Regel ist das Fluoreszenzquant energieärmer und damit langwelliger, so dass es im Falle der Zinnatome zum sichtbaren Teil des elektromagnetischen Spektrums gehört. Ein typisches Fluoreszenzspektrum ist in Fig. 4 dargestellt. Deutlich erkennbar ist ein stark verbreiterter Fluoreszenz-Peak zwischen ca. 360 nm und ca. 750 nm mit einem Maximum bei ca. 500 nm, der von einigen charakteristischen Linien überlagert ist. Im Gesamteindruck ist makroskopisch ein milchigblaugraues Fluoreszenzleuchten erkennbar.

Aufgrund der geringen Absorptionslänge der UV-Strahlung im Glas werden nur die unmittelbar beleuchteten Zinnatome angeregt, was bedeutet, dass die Zinnbadseite eindeutig identifiziert werden kann, da das UV-Licht bei Bestrahlung der Atmosphärenseite an der Oberfläche absorbiert wird, so dass an der rückseitigen Fläche des Glasproduktes vorhandene Zinnatome nicht mehr angeregt werden und entsprechend keine Fluoreszenz detektiert werden kann. Somit ist eine Möglichkeit gegeben, mittels eines optischen Testverfahrens die Zinnbadseite des Floatglases von der bzw. den nicht mit dem Zinnbad in Kontakt gekommenen Seiten zu unterscheiden.

Aus der Praxis ist bekannt, zur Bestimmung der Zinnbadseite des Glasproduktes, dessen Oberfläche mit einer Quecksilber-Niederdruckdampflampe, wie sie beispielsweise aus Banknotenprüfgeräten bekannt ist, zu bestrahlen. Hierbei handelt es sich jedoch um ein äußerst grobes und ungenaues Messverfahren, da die Fluoreszenzintensität relativ zur Intensität der Hg-Lampe sehr gering ist und von dieser stark überlagert wird. Daher handelt es sich um eine nur schwer handhabbare Apparatur, welche zudem kein quantifizierbares Messergebnis der Fluoreszenz, sondern lediglich den Effekt der Fluoreszenz auf der Glasoberfläche sichtbar macht.

Ausgehend hiervon liegt der Erfindung die Aufgabe zugrunde, eine Vorrichtung der eingangs genannten Art anzugeben, die eine schnelle zuverlässige Bestimmung der Elementbelegung einer Oberfläche ermöglicht und dabei einfach bedienbar ist. Ferner soll sich die Vorrichtung durch vergleichsweise geringe Anschaffungs- und Betriebskosten auszeichnen und eine lange Lebensdauer der eingesetzten Komponenten aufweisen.

Die Aufgabe wird mit einer Vorrichtung nach dem Oberbegriff des Patentanspruches 1 dadurch gelöst, dass sie eine Detektoreinheit zur Detektion der Fluoreszenzstrahlung aufweist und die Strahlquelle eine W-Strahlung emittierende Leuchtdiode umfasst.

Die erfindungsgemäße Vorrichtung lässt sich zur Bestimmung sämtlicher Elemente auf einer Oberfläche einsetzen, welche im UV-Bereich des elektromagnetischen Spektrums anregbar sind und die Anregungsenergie strahlend mittels Fluoreszenz abgeben. Entsprechend ergibt sich eine weites Spektrum möglicher Anwendungen in der Materialprüfung. Insbesondere eignet sie sich zur Bestimmung der Zinnkontamination auf Floatglas. Aber auch die Verwendung zur Prüfung von Banknoten, Briefmarken oder anderen Sicherheitslabeln oder - anhängern auf Flughäfen oder anderen sicherheitsrelevanten Bereichen ist bei der erfindungsgemäßen Vorrichtung möglich.

Der besondere Vorteil der erfindungsgemäßen Vorrichtung besteht darin, dass sie aufgrund der im Vergleich zu herkömmlichen Hg-Dampflampen kompakten Abmessungen einer UV-LED und aufgrund der einer LED innewohnenden Robustheit und Langlebigkeit problemlos als mobiles Handmessgerät ebenso wie als stationäres Messgerät in einer Produktionslinie ausgelegt werden kann. Der vergleichsweise geringe Stromverbrauch einer LED verbunden mit einer weit weniger aufwändigen Ansteuerelektronik - Vorschaltgeräte und Starter sind nicht erforderlich - qualifizieren eine UV-LED zusätzlich für den Einbau in ein kompaktes, autarkes und einfach bedienbares Handgerät. Durch Verwendung einer Detektionseinheit kann die Fluoreszenz auf der Oberfläche zuverlässig festgestellt und in Abhängigkeit von einer ggf. nachgeschalteten Auswerteelektronik rein qualitativ oder auch quantitativ angezeigt werden. Um die Quantenausbeute bei der Fluoreszenz insbesondere von Zinn zu maximieren, kommt bevorzugt eine im UV-C-Bereich des elektromagnetischen Spektrums (100 nm - 280 nm, entspr. 12,4 - 4,43 eV) emittierende Leuchtdiode zum Einsatz, wobei das Emissionsmaximum bevorzugt bei 280 nm liegt.

Für die Anordnung von Strahlquelle und Detektoreinheit relativ zueinander und zur zu untersuchenden Oberfläche gibt es verschiedene Möglichkeiten. So ist es im Falle transparenter Bauteile, insbesondere bei Glasprodukten, einerseits möglich, Strahlquelle und Detektoreinheit auf unterschiedlichen Seiten des Bauteils anzuordnen, so dass die Strahlquelle die elementbelegte Oberfläche bestrahlt und somit die gewünschte isotrop emittierte Fluoreszenz erzeugt, während die Detektoreinheit an der gegenüberliegenden Seite angeordnet ist und ausschließlich das durch das Bauteil hindurchdringende Fluoreszenzlicht aufnimmt. Der Vorteil dieser Konfiguration ist, dass die winkelmäßige Ausrichtung von Strahlquelle und Detektoreinheit praktisch beliebig ist, da das auf die Oberfläche aufgestrahlte UV-Licht infolge seiner sehr kurzen Absorptionslänge in den meisten transparenten Stoffen, insbesondere in gewöhnlichem Glas, im Gegensatz zum Fluoreszenzlicht nicht durch das Bauteil transmittiert wird und somit nicht als Störlicht vor der Detektoreinheit ausgefiltert zu werden braucht. Jedoch ist eine kompakte Bauweise des Messgerätes vergleichsweise schwer erreichbar ist, da Strahlquelle und Detektoreinheit sich auf unterschiedlichen Seiten des zu untersuchenden transparenten Bauteils befinden. Denkbar ist gleichwohl eine Anordnung in einem Gerät, welches entsprechend das Bauteil an seinem Randbereich umgreift. Im Falle einer stationär in einer Produktionsanlage eingesetzten Vorrichtung ist eine Anordnung von Strahlquelle und Detektoreinheit auf unterschiedlichen Seiten des Bauteils jedoch in der Regel unproblematisch.

Nach einer alternativen, besonders bevorzugten Ausgestaltung der erfindungsgemäßen Vorrichtung ist vorgesehen, dass die Strahlquelle und die Detektoreinheit auf derselben Seite der Oberfläche angeordnet sind. In dieser Konfiguration können Strahlquelle und Detektoreinheit problemlos und platzsparend in einem gemeinsamen Gehäuse angeordnet werden. Jedoch muss beachtet werden, dass das von der Oberfläche rückreflektierte UV-Licht möglichst von der Detektoreinheit ferngehalten wird, was am einfachsten dadurch gelingt, dass die Leuchtdiode die Oberfläche unter einem Einfallswinkel α > 0 bestrahlt und die Detektionseinheit außerhalb des reflektierten Strahls angeordnet ist. Handelt es sich bei der spiegelnd zu untersuchenden Oberfläche beispielsweise um eine Floatglasoberfläche, so wird infolge der sehr glatten Glasoberfläche das aufgestrahlte UV-Licht unter definiertem Reflexionswinkel rückreflektiert, so dass eine Ausrichtung der Detektoreinheit außerhalb des reflektierten Strahls problemlos möglich ist.

Wichtig für eine einfache Handhabbarkeit der Vorrichtung ist es, dem Bediener der Vorrichtung eine möglichst große Freiheit bei der Wahl des Messabstands zu erlauben. Dies wird bevorzugt dadurch erreicht, dass die Strahlquelle wenigstens ein erstes strahlformendes Element aufweist, wobei das strahlformende Element den Strahl kollimiert. Hierbei wird ein annähernd paralleles Strahlenbündel erzeugt, welches auf der zu untersuchenden Oberfläche unabhängig vom jeweils gewählten Abstand eine gleichmäßige Anregungsintensität ermöglicht. Zur adäquaten Strahlformung können Blenden und/oder Kollimatorlinsen verwendet werden.

Entscheidend kommt es bei der Messung darauf an, aussagekräftige und reproduzierbare Ergebnisse unabhängig von den Beleuchtungsverhältnissen der Umgebung zu erhalten. Auch eine Messung in Anwesenheit von UV-Strahlung, beispielsweise bei Sonneneinstrahlung, darf die Messergebnisse nicht verfälschen. Nach einer weiteren vorteilhaften Ausgestaltung der Erfindung ist daher vorgesehen, dass die Strahlquelle Modulationsmittel zur Modulierung der durch die Leuchtdiode emittierten UV-Strahlung umfasst. Hierdurch ist es möglich, der Messstrahlung und damit auch der Fluoreszenzstrahlung ein unverwechselbares Muster gleichsam aufzuprägen, wodurch eine Unterscheidbarkeit gegenüber UV- und sichtbarem Licht der Umgebung durch entsprechende der Detektoreinheit nachgeschaltete Auswertemittel möglich wird.

Die Detektoreinheit ihrerseits umfasst bevorzugt ein Detektorelement zur Umsetzung der Strahlung in ein elektrisches Signal. Das Detektorelement kann beispielsweise als Fotodiode ausgebildet sein, deren Sperrstrom in Abhängigkeit von der auftreffenden Fluoreszenzstrahlung variiert. Zur Maximierung der messbaren Fluoreszenzintensität und damit zur Maximierung des Signal-Rausch-Abstandes im Messsignal ist die Detektoreinheit ferner bevorzugt mit einem strahlformenden Element zur Fokussierung der Fluoreszenzstrahlung auf das Detektorelement versehen. Dieses strahlformende Element ist zweckmäßigerweise als Fokussierlinse ausgebildet. Weiterhin sollte möglichst viel Störlicht von dem Detektorelement ferngehalten werden, was durch Einsatz entsprechender Filter zur Abschwächung nicht interessierender Spektralbereiche (beispielsweise des nahen Infrarots) möglich ist.

Um den Intensitätswert des auf das Detektorelement fallenden Fluoreszenzlichtes in ein geeignetes Signal umzuwandeln, ist nach einer weitergehenden Lehre der Erfindung vorgesehen, dass die Vorrichtung elektronische Auswertemittel zur Erzeugung eines die Fluoreszenzintensität charakterisierenden elektrischen Signalwertes umfasst. Beispielsweise kann es sinnvoll sein, den Intensitätswert des Fluoreszenzwertes in einen proportionalen Gleichspannungswert umzuwandeln, welcher in den elektronischen Auswertemitteln nachgeschalteten Anzeigemitteln zweckmäßigerweise als Zahlwert auf einer Segment- oder Matrixanzeige dargestellt wird. Wird im Falle der Produktion und Weiterverarbeitung von Glasprodukten, insbesondere Floatglas, die erfindungsgemäße Vorrichtung *inline* in einer nachgeschalteten Produktionsanlage eingesetzt, so kann der Messwert auch in dieser Produktionsanlage unmittelbar verarbeitet werden, um die gewünschte Glasseite einer Bearbeitung (z.B. Verklebung, Beschichtung, Verbundherstellung usw.) zuzuführen. Auch bei der Herstellung und Bearbeitung von technischen Bauteiloberflächen allgemein kann die Vorrichtung in eine Produktionsanlage integriert und die Fluoreszenzwerte als Maß für die Elementbelegung der Oberfläche eingesetzt werden, um beispielsweise eine gleichbleibende Oberflächenreinheit und damit Produktqualität sicherzustellen. Ebenso ist es möglich, die detektierte Fluoreszenz und damit die Identifikation der elementbelegten - oder bei nicht detektierter Fluoreszenz die Identifikation der nicht belegten Seite - durch eine entsprechende farbige Anzeige-LED darzustellen.

Wie Untersuchungen der Anmelderin gezeigt haben, wird die Intensität der Fluoreszenz auch durch die Materialzusammensetzung der zu untersuchenden Oberfläche, im Falle eines zu untersuchenden Glasproduktes durch die Materialzusammensetzung und in gewissen Grenzen durch den Glasherstellprozess, beeinflusst. Um derartige Einflüsse, die in Einzelfällen eine eindeutige Aussage über die Orientierung des Glasproduktes bei der Messung unmöglich machen können, zu minimieren, ist nach einer weiteren vorteilhaften Ausgestaltung der Erfindung vorgesehen, dass in den elektronischen Auswertemitteln in Abhängigkeit von der physikalischen und/oder chemischen Beschaffenheit der zu untersuchenden Oberfläche ein erster Schwellwert einstellbar ist, unterhalb dessen der elektrische Signalwert eine nicht belegte Oberfläche repräsentiert. Bevorzugt sind die Auswertemittel dabei derart ausgebildet, dass sie unmittelbar vor der Messung eine einfache Eingabe eines beispielsweise auf Erfahrungswerten des Bedieners basierenden Schwellwertes erlauben. In analoger Weise kann vorgesehen sein, dass in den elektronischen Auswertemitteln in Abhängigkeit von der physikalischen und/oder chemischen Beschaffenheit der zu untersuchenden Oberfläche ein zweiter Schwellwert einstellbar ist, oberhalb dessen der elektrische Signalwert eine elementbelegte Oberfläche repräsentiert.

In einer anderen Betriebsweise des Messgeräts wird eine vergleichende Messung beider Oberflächen, insbesondere beider Glasoberflächen, entweder durch zwei Sensoren oder zeitlich aufeinander folgende Messungen durchgeführt.

Im Falle einer Modulation des von der erfindungsgemäß eingesetzten UV-LED ausgestrahlten Anregungslichtes ist nach einer weiteren vorteilhaften Ausgestaltung der Erfindung vorgesehen, dass die elektronischen Auswertemittel wenigstens ein Filter zur Abschwächung der Frequenzen oberhalb und unterhalb der Modulationsfrequenz der UV-Strahlung umfassen. Durch Einsatz derartiger Filter, beispielsweise in Form eines Hochpassfilters und eines Tiefpassfilters und/oder eines Bandpassfilters ist es problemlos möglich, Störeinflüsse anderer Frequenzen, insbesondere von Oberschwingungen des zu analysierenden Signals derart abzuschwächen, dass sie das Messergebnis nicht mehr nennenswert beeinflussen.

Der Erfindung liegt ferner die Aufgabe zugrunde, ein einfaches, mit geringem technischen Aufwand durchführbares Verfahren anzugeben, mittels dessen die Elementbelegung auf einer Oberfläche, bei der die Oberfläche mit einer das oder die Elemente zur Fluoreszenz anregenden Strahlung bestrahlt wird, schnell, zuverlässig und reproduzierbar zu bestimmen.

Die Aufgabe wird mit einem Verfahren gemäß dem Oberbegriff von Patentanspruch 18 dadurch gelöst, dass die Strahlung von einer UV-Strahlung emittierenden Leuchtdiode emittiert wird und von einer Detektoreinheit zur Detektion der Fluoreszenzstrahlung aufgenommen wird.

Im Folgenden wird die Erfindung anhand einer ein Ausführungsbeispiel darstellenden Zeichnung näher erläutert.

Es zeigen:
- Fig. 1: eine Vorrichtung zur Bestimmung der Zinnkontamination auf einer Oberfläche eines Glasproduktes in einer ersten Konfiguration,
- Fig. 2: die erfindungsgemäße Vorrichtung in einer zu der Vorrichtung aus Fig. 1 alternativen Konfiguration in schematischer Seitenansicht,
- Fig. 3: ein Blockschaltbild der der Detektoreinheit nachgeschalteten Auswerteelektronik und
- Fig. 4: ein typisches Fluoreszenzspektrum der Zinnbadseite von Floatglas.

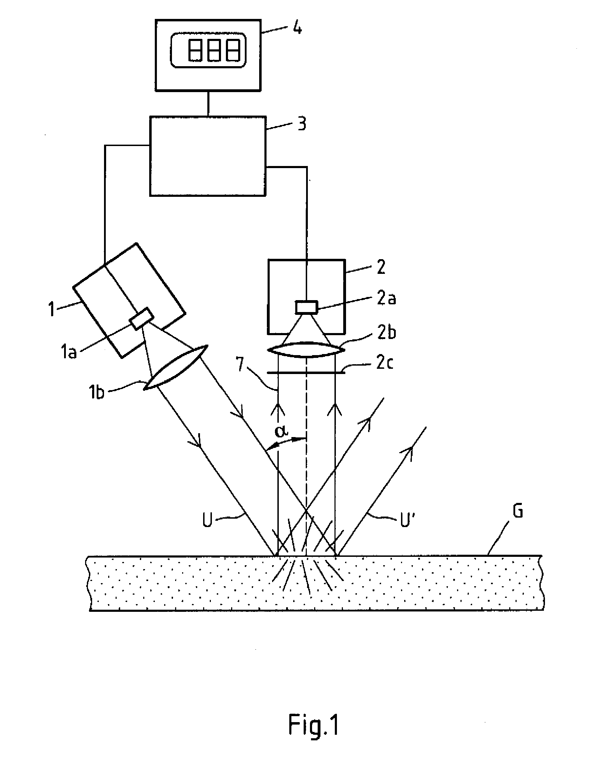

In Fig. 1 ist eine Vorrichtung zur Bestimmung der Zinnkontamination auf einer Oberfläche G eines Glasproduktes, vorliegend auf einer Floatglasscheibe dargestellt. Die Vorrichtung umfasst eine Strahlquelle 1 zur Erzeugung von die Zinnatome auf der Glasoberfläche G zur Fluoreszenz anregender UV-Strahlung. Erfindungsgemäß umfasst die Strahlquelle 1 als strahlerzeugendes Element eine UV-Strahlung U emittierende Leuchtdiode 1a (LED). Bevorzugt handelt es sich um eine solche, die im UV C-Bereich, bevorzugt bei ca. 280 nm, emittiert, um die Quantenausbeute bei der Zinn-Fluoreszenz zu maximieren. Zur Kollimierung der emittierten UV-Strahlung umfasst die Strahlquelle 1 ferner eine Kollimationslinse 1b, welche einen annähernd parallelen Strahlverlauf erzeugt, so dass auf der zu untersuchenden Glasoberfläche G unabhängig vom jeweils gewählten Abstand eine gleichmäßige Anregungsintensität vorliegt.

Die erfindungsgemäße Vorrichtung umfasst weiterhin eine Detektoreinheit 2 zur Detektion der von den auf der Glasoberfläche G vorhandenen Zinnatomen isotrop emittierten Fluoreszenzstrahlung F. Die Detektoreinheit 2 ihrerseits weist ein Detektorelement, vorliegend ein Fotodiode 2a, auf, auf die die Fluoreszenzstrahlung F mittels einer Fokussierlinse 2b fokussiert wird. In Propagationsrichtung der Fluoreszenzstrahlung F vor der Fokussierlinse 2b ist ferner ein optisches Filter 2c zur Ausfilterung von Umgebungslicht angeordnet, um Störeinflüsse weiter zu minimieren.

Wie in Fig. 1 erkennbar, sind die Strahlquelle 1 und die Detektoreinheit 2 relativ zueinander und zur Glasoberfläche G derart ausgerichtet, dass das eingestrahlte UV-Licht U unter einem Winkel α > 0 (vorliegend ca. 35°) auf die Glasoberfläche G fällt und an der Oberfläche G unter demselben Winkel reflektiert wird. Der Detektor steht hingegen im Wesentlichen lotrecht zur Glasoberfläche, so dass das Detektorelement 2a nicht mit reflektierter UV-Strahlung U', sondern ausschließlich mit Fluoreszenzstrahlung F beaufschlagt wird.

Die Vorrichtung gemäß Fig. 1 umfasst ferner eine kombinierte Ansteuer- und Auswerteeinheit 3, welche die Ansteuerelektronik (nicht im Einzelnen dargestellt) für die UV-LED 1a enthält. Die Ansteuerelektronik umfasst einen Oszillator, welcher das ausgestrahlte UV-Licht U mit einer Frequenz von vorliegend 1,5 kHz moduliert. Die Ansteuer- und Auswerteeinheit 3 enthält ferner eine Schaltung, welche das von der Fotodiode 2a in Abhängigkeit von der Intensität der eingestrahlten Fluoreszenzstrahlung F erzeugte Stromsignal in eine proportionale Gleichspannung umwandelt, welche ihrerseits auf Anzeigemitteln in Form einer Displayeinheit 4 als Zahlenwert ausgegeben wird. Alternativ oder ergänzend zur in Fig. 1 dargestellten Displayeinheit 4 können auch farbige Anzeige-LEDs vorgesehen sein, welche signalisieren, ob die Zinnbadseite (z.B. grüne LED leuchtet auf) oder die zinnbadabgewandte Seite (z.B. rote LED leuchtet auf) untersucht wurde. Auf der Ansteuer- und Auswerteeinheit 3 können ferner Eingabemittel vorgesehen sein (nicht dargestellt), mittels derer sich ein erster und ein zweiter Schwellwert einstellen lassen, um beispielsweise die Materialzusammensetzung der jeweils untersuchten Glassorte, die ihrerseits einen Einfluss auf die Intensität des Fluoreszenzsignals hat, zu berücksichtigen.

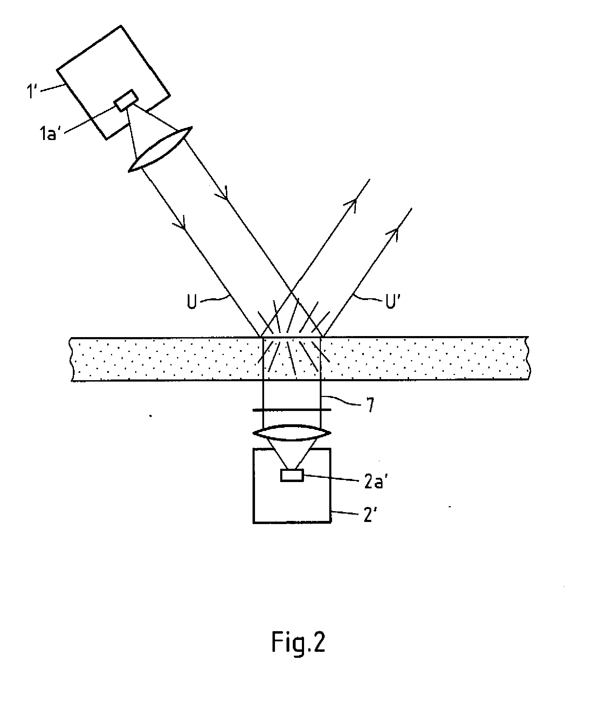

In Fig.2 ist eine alternative Konfiguration von Strahlquelle 1' und Detektoreinheit 2' dargestellt. Hierbei ist die Strahlquelle 1' unverändert oberhalb der zu untersuchenden Glasoberfläche G angeordnet und bestrahlt diese wiederum unter einem Einfallswinkel von ca. 35°. Die Detektoreinheit 2' ist hingegen unterhalb des Floatglases angeordnet und nimmt die an der der Strahlquelle 1' zugewandten Oberfläche erzeugte und durch den Glaskörper transmittierte Fluoreszenzstrahlung F' auf. Der Vorteil ist hierbei, dass keine störende Anregungsstrahlung U' auf das Detektorelement 1a' fallen kann, da diese im Glas vollständig absorbiert wird.

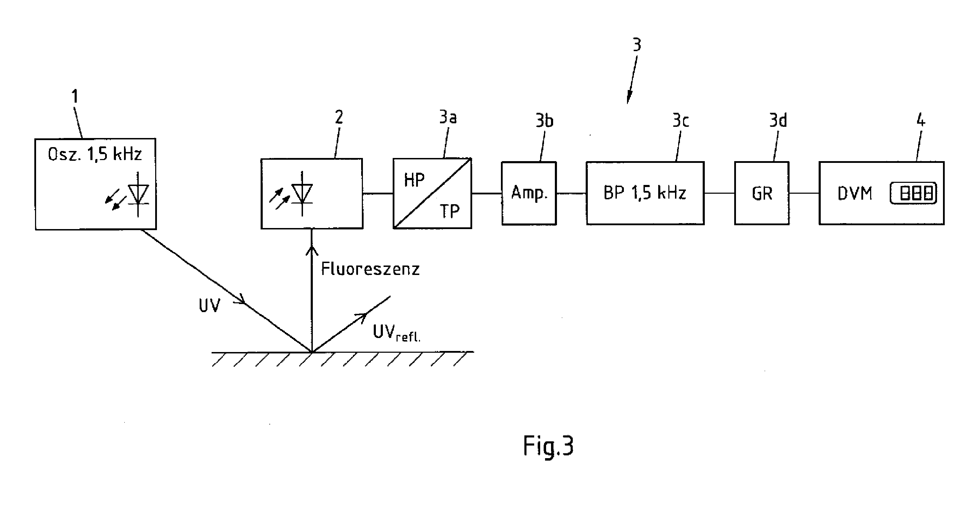

In Fig. 3 ist nun ein Blockschaltbild der der Detektoreinheit 2 nachgeschalteten Auswerteelektronik dargestellt. Die von der erfindungsgemäß verwendeten UV-LED erzeugte UV-Strahlung wird, wie bereits erwähnt, mittels eines Oszillators mit einer Frequenz von 1,5 kHz moduliert. Das auf der Glasoberfläche G erzeugte Fluoreszenzlicht wird von der in der Detektoreinheit 2 vorhandenen Fotodiode 2a als Detektorelement in ein Stromsignal umgewandelt, welches an die Auswerteeinheit 3 weitergegeben wird. Dort durchläuft es als an einem ohmschen Widerstand abgegriffenes Spannungssignal mehrere Hochpass- und Tiefpassfilter, welche summarisch durch Block 3a symbolisiert werden. Ferner wird das Signal in mehreren Verstärkerstufen, zusammengefasst in dem Block 3b, verstärkt. Weiter durchläuft das Signal einen Bandpassfilter 3c mit einer Mittenfrequenz von 1,5 kHz, also der Modulationsfrequenz des Anregungssignals U und des Fluoreszenzsignals F. Schließlich wird das 1,5kHz-Spannungssignal in einem Gleichrichter gleichgerichtet und an das Displayeinheit (DVM) ausgegeben.

Mit der erfindungsgemäßen Vorrichtung wird ein kompaktes und infolge des geringen Energieverbrauchs der erfindungsgemäß eingesetzten UV-LED autark betreibbares, robustes Messgerät geschaffen, welches zuverlässige und reproduzierbare Ergebnisse bei der Bestimmung der Elementbelegung auf einer Oberfläche ermöglicht. Als besonders vorteilhaft erweist sich die Verwendung zur Bestimmung der Zinnkontamination auf Floatglas.

## Patentansprüche

1. Vorrichtung zur Bestimmung der Elementbelegung auf einer Oberfläche (G), insbesondere zur Bestimmung der Zinnkontamination auf Floatglas, umfassend eine Strahlquelle (1), deren Strahlung das Element zur Fluoreszenz anregt,
**dadurch gekennzeichnet, dass**
die Vorrichtung eine Detektoreinheit (2) zur Detektion der Fluoreszenzstrahlung aufweist und die Strahlquelle (1) eine UV-Strahlung emittierende Leuchtdiode (1a) umfasst.

2. Vorrichtung nach Anspruch 1,
**dadurch gekennzeichnet, dass**
die Leuchtdiode im (1a) UV C-Bereich, bevorzugt bei ca. 280 nm, emittiert.

3. Vorrichtung nach Anspruch 1 oder 2,
**dadurch gekennzeichnet, dass**
die Strahlquelle (1) und die Detektoreinheit (2) auf derselben Seite der Oberfläche (G) angeordnet sind.

4. Vorrichtung nach Anspruch 1 oder 2,
**dadurch gekennzeichnet, dass**
die Detektoreinheit (2) auf der der Strahlquelle (1) abgewandten Seite der Oberfläche (G) angeordnet ist.

5. Vorrichtung nach einem der Ansprüche 1 bis 4,
**dadurch gekennzeichnet, dass**
die Leuchtdiode (1a) die Oberfläche (G) unter einem Einfallswinkel α > 0 bestrahlt und die Detektoreinheit (2) außerhalb des reflektierten Strahls (U') angeordnet ist.

6. Vorrichtung nach einem der Ansprüche 1 bis 5,
**dadurch gekennzeichnet, dass**
die Strahlquelle (1) wenigstens ein erstes strahlformendes Element (1b), insbesondere eine Blende und/oder Kollimatorlinse (1b), aufweist, wobei das strahlformende Element (1b) den Strahl (U) kollimiert.

7. Vorrichtung nach einem der Ansprüche 1 bis 6,
**dadurch gekennzeichnet, dass**
die Strahlquelle (1) Modulationsmittel zur Modulierung der durch die Leuchtdiode (1a) emittierten UV-Strahlung umfasst.

8. Vorrichtung nach einem der Ansprüche 1 bis 7,
**dadurch gekennzeichnet, dass**
die Detektoreinheit (2) ein Detektorelement, bevorzugt eine Fotodiode (2a), zur Umsetzung der Strahlung (F) in ein elektrisches Signal umfasst und wenigstens ein zweites strahlformendes Element (2b), insbesondere eine Fokussierlinse (2b), zur Fokussierung der Fluoreszenzstrahlung (F) auf das Detektorelement (2a) und/oder ein Filterelement (2c) zur Ausfilterung von Störlicht umfasst.

9. Vorrichtung nach einem der Ansprüche 1 bis 8,
**dadurch gekennzeichnet, dass**
die Vorrichtung elektronische Auswertemittel (3) zur Erzeugung eines die Fluoreszenzintensität charakterisierenden elektrischen Signalwertes umfasst.

10. Vorrichtung nach Anspruch 9,
**dadurch gekennzeichnet, dass**
in den elektronischen Auswertemitteln (3) in Abhängigkeit von der Beschaffenheit der zu untersuchenden Oberfläche ein erster Schwellwert einstellbar ist, unterhalb dessen der elektrische Signalwert eine nicht elementbelegte Oberfläche repräsentiert.

11. Vorrichtung nach Anspruch 9 oder 10,
**dadurch gekennzeichnet, dass**
in den elektronischen Auswertemitteln (3) in Abhängigkeit von der Beschaffenheit der zu untersuchenden Oberfläche ein zweiter Schwellwert einstellbar ist, oberhalb dessen der elektrische Signalwert eine elementbelegte Oberfläche repräsentiert.

12. Anlage zur Produktion und/oder Verarbeitung von Glasprodukten, insbesondere von Floatglas, mit einer Vorrichtung nach einem der Ansprüche 1 bis 11.

13. Verfahren zur Bestimmung der Elementbelegung auf einer Oberfläche (G), bei der die Oberfläche mit einer das Element zur Fluoreszenz anregenden Strahlung (U) bestrahlt wird,
**dadurch gekennzeichnet, dass**
die Strahlung (U) von einer UV-Strahlung emittierenden Leuchtdiode (1a) emittiert wird und von einer Detektoreinheit (2) zur Detektion der Fluoreszenzstrahlung (F) aufgenommen wird.

14. Verwendung einer Vorrichtung nach einem der Ansprüche 1 bis 11 zur Bestimmung der Zinnseite bei einem im FloatProzess hergestellten Floatglasprodukt.

15. Verwendung einer Vorrichtung nach einem der Ansprüche 1 bis 11 zur Überprüfung von mit einer fluoreszierenden Markierung versehenen Banknoten, Fahrkarten, Briefmarken oder Sicherheitslabeln oder -anhängern.

## Geänderte Patentansprüche

### Geänderte Patentansprüche gemäss Regel 137(2) EPÜ.

**1.** Vorrichtung zur Bestimmung der Elementbelegung auf einer Oberfläche (G), insbesondere zur Bestimmung der Zinnkontamination auf Floatglas, umfassend eine Strahlquelle (1), deren Strahlung das Element zur Fluoreszenz anregt, wobei die Vorrichtung eine Detektoreinheit (2) zur Detektion der Fluoreszenzstrahlung aufweist und die Strahlquelle (1) eine UV-Strahlung emittierende Leuchtdiode (1a) umfasst,
**dadurch gekennzeichnet, dass**
die Leuchtdiode (1a) die Oberfläche (G) unter einem Einfallswinkel α > 0 bestrahlt und die Detektoreinheit (2) außerhalb des reflektierten Strahls (U') angeordnet ist, so dass das rückreflektierte UV-Licht von der Detektoreinheit (2) ferngehalten wird.

**2.** Vorrichtung nach Anspruch 1,
**dadurch gekennzeichnet, dass**
die Leuchtdiode im (1a) UV C-Bereich, bevorzugt bei ca. 280 nm, emittiert.

**3.** Vorrichtung nach Anspruch 1 oder 2,
**dadurch gekennzeichnet, dass**
die Strahlquelle (1) und die Detektoreinheit (2) auf derselben Seite der Oberfläche (G) angeordnet sind.

**4.** Vorrichtung nach Anspruch 1 oder 2,
**dadurch gekennzeichnet, dass**
die Detektoreinheit (2) auf der der Strahlquelle (1) abgewandten Seite der Oberfläche (G) angeordnet ist.

**5.** Vorrichtung nach einem der Ansprüche 1 bis 4,
**dadurch gekennzeichnet, dass**
die Strahlquelle (1) wenigstens ein erstes strahlformendes Element (1b), insbesondere eine Blende und/oder Kollimatorlinse (1b), aufweist, wobei das strahlformende Element (1b) den Strahl (U) kollimiert.

**6.** Vorrichtung nach einem der Ansprüche 1 bis 5,
**dadurch gekennzeichnet, dass**
die Strahlquelle (1) Modulationsmittel zur Modulierung der durch die Leuchtdiode (1a) emittierten UV-Strahlung umfasst.

**7.** Vorrichtung nach einem der Ansprüche 1 bis 6,
**dadurch gekennzeichnet, dass**
die Detektoreinheit (2) ein Detektorelement, bevorzugt eine Fotodiode (2a), zur Umsetzung der Strahlung (F) in ein elektrisches Signal umfasst und wenigstens ein zweites strahlformendes Element (2b), insbesondere eine Fokussierlinse (2b), zur Fokussierung der Fluoreszenzstrahlung (F) auf das Detektorelement (2a) und/oder ein Filterelement (2c) zur Ausfilterung von Störlicht umfasst.

**8.** Vorrichtung nach einem der Ansprüche 1 bis 7,
**dadurch gekennzeichnet, dass**
die Vorrichtung elektronische Auswertemittel (3) zur Erzeugung eines die Fluoreszenzintensität charakterisierenden elektrischen Signalwertes umfasst.

**9.** Vorrichtung nach Anspruch 8,
**dadurch gekennzeichnet, dass**
in den elektronischen Auswertemitteln (3) in Abhängigkeit von der Beschaffenheit der zu untersuchenden Oberfläche ein erster Schwellwert einstellbar ist, unterhalb dessen der elektrische Signalwert eine nicht elementbelegte Oberfläche repräsentiert.

**10.** Vorrichtung nach Anspruch 8 oder 9,
**dadurch gekennzeichnet, dass**
in den elektronischen Auswertemitteln (3) in Abhängigkeit von der Beschaffenheit der zu untersuchenden Oberfläche ein zweiter Schwellwert einstellbar ist, oberhalb dessen der elektrische Signalwert eine elementbelegte Oberfläche repräsentiert.

**11.** Anlage zur Produktion und/oder Verarbeitung von Glasprodukten, insbesondere von Floatglas, mit einer Vorrichtung nach einem der Ansprüche 1 bis 10.

**12.** Verfahren zur Bestimmung der Elementbelegung auf einer Oberfläche (G), bei der die Oberfläche mit einer das Element zur Fluoreszenz anregenden Strahlung (U) bestrahlt wird, wobei die Strahlung (U) von einer UV-Strahlung emittierenden Leuchtdiode (1a) emittiert wird und von einer Detektoreinheit (2) zur Detektion der Fluoreszenzstrahlung (F) aufgenommen wird,
**dadurch gekennzeichnet, dass** die Leuchtdiode (1a) die Oberfläche (G) unter einem Einfallswinkel α > 0 bestrahlt und die Detektoreinheit (2) außerhalb des reflektierten Strahls (U') angeordnet ist, so dass das rückreflektierte UV-Licht von der Detektoreinheit (2) ferngehalten wird.

**13.** Verwendung einer Vorrichtung nach einem der Ansprüche 1 bis 11 zur Bestimmung der Zinnseite bei einem im Float-Prozess hergestellten Floatglasprodukt.

**14.** Verwendung einer Vorrichtung nach einem der Ansprüche 1 bis 11 zur Überprüfung von mit einer fluoreszierenden Markierung versehenen Banknoten, Fahrkarten, Briefmarken oder Sicherheitslabeln oder -anhängern.
